# EUROPÄISCHE PATENTSCHRIFT

(11) **EP 3 317 497 B1**
(45) Veröffentlichungstag und Bekanntmachung des Hinweises auf die Patenterteilung: **20.11.2019**
(21) Anmeldenummer: 16732571.1
(22) Anmeldetag: 21.06.2016
(51) Int. Cl.: F01K 17/00

(54) **DAMPFKRAFTWERK**
STEAM POWER PLANT
CENTRALE À VAPEUR

(30) Priorität: 30.06.2015 AT 4192015
(43) Veröffentlichungstag der Anmeldung: 09.05.2018
(73) Patentinhaber: Gutscher, Rudolf, 3382 Albrechtsberg (AT)
(72) Erfinder: Gutscher, Rudolf, 3382 Albrechtsberg (AT)
(74) Vertreter: Gibler & Poth Patentanwälte KG
(86) Internationale Anmeldenummer: PCT/EP2016/064281
(87) Internationale Veröffentlichungsnummer: WO 2017/001241

(56) Entgegenhaltungen:
- WO-A1-2010/148538
- CN-A- 103 090 357
- DE-C1- 10 214 183

## Beschreibung

Die Erfindung betrifft ein Dampfkraftwerk gemäß dem Oberbegriff des Patentanspruches 1.

Es sind Dampfkraftwerke bekannt, bei welchen der Abdampf aus Dampfturbinen oder Dampfmaschinen in einem Kondensatorsystem verflüssigt wird, bevor diese wieder zu dem Wärmeerzeuger, beispielsweise Reaktor, Dampfkessel oder GuD Anlage, gepumpt werden kann.

Aus der CN 103090357 A ist ein nach dem Rankine Prozess arbeitendes Dampfkraftwerk, wobei der Arbeitsmittelkreislauf - in Flussrichtung des Arbeitsmittels betrachtet - einen Kessel zum Verdampfen des Arbeitsmittels, ein Dampfturbinensystem, einen Kondensator zum Kondensieren des Arbeitsmittels und ein Arbeitsmittelpumpsystem umfasst. Weiters ist eine Absorptionswärmepumpe im Kondensator vorgesehen, welche Wärmeenergie aus dem Arbeitsmittel vor dessen Kondensation aufnimmt und das Arbeitsmittel nach der Kondensation aber vor der Zuführung zu dem Arbeitsmittelpumpsystem wieder erwärmt, um Teile der Abwärme des Arbeitsmittels wiederzugewinnen. Das Austreibersystem der Absorptionswärmepumpe wird durch eine Abzapfung aus der Turbine mit der zum Austreiben benötigten Wärmeenergie versorgt.

Aus der WO 2010/148538 A1 ist ein nach dem Rankine Prozess arbeitendes Dampfkraftwerk mit einem Arbeitsmittelkreislauf bekannt. Der Arbeitsmittelkreislauf ist an zwei Stellen mit einem weiteren Kreislauf verbunden sein, wobei der weiteren Kreislauf auch für die Wärmeabfuhr beziehungsweise Wärmezufuhr zuständig ist.

Aus der DE 102 14 183 C1 ist ein Kraftwerk zur Kälteerzeugung bekannt. Für die Kälteerzeugung ist eine Absorptionskältemaschine vorgesehen ist, welche mittels Dampfes aus einer Turbinenanzapfung betrieben wird.

Nachteilig daran ist, dass die Kondensationswärme als Verlustwärme verloren geht. Aufgabe der Erfindung ist es daher ein Dampfkraftwerk der eingangs genannten Art anzugeben, mit welchem die genannten Nachteile vermieden werden können, und welches einen hohen Wirkungsgrad aufweist.

Erfindungsgemäß wird dies durch die Merkmale des Patentanspruches 1 erreicht.

Dadurch kann der Wirkungsgrad des Dampfkraftwerkes erhöht und damit Emissionen des Dampfkraftwerkes vermieden werden. Weiters können herkömmliche Kühlsysteme wie beispielsweise Flusswasserkühlung, Trockenkühlsysteme, Luftkühler oder Kühltürme, je nach Umfang der Ausführung der Erfindung, ersetzt oder teilweise ersetzt werden. Durch die Absorptionswärmepumpe kann die Kondensationswärme zumindest zum Teil rückgewonnen werden. Hierbei kann der durch das Austreibersystem der Absorptionswärmepumpe zusätzliche verursachte Energiebedarf der Absorptionswärmepumpe durch das Arbeitsmittel selber bereitgestellt werden. Durch die Turbinenanzapfung wird ein Dampf für das Austreibersystem verwendet, welcher bereits einen Teil seiner verfügbaren Energie in dem Dampfturbinensystem abgeben konnte, wodurch die zur Stromgewinnung zur Verfügung stehende Energie nur geringfügig verringert wird. Dadurch bleibt der zusätzliche Energieaufwand für die Absorptionswärmepumpe geringer als die durch die Absorptionswärmepumpe rückgewonnene und nutzbare Kondensationswärme. Dadurch kann ein Gesamtsystem bereit gestellt werden, welches insgesamt einen erhöhten Wirkungsgrad aufweist und einfach realisierbar ist. Mit der vorliegenden Erfindung ist es auch möglich den Regelbetrieb einer derart ausgebildeten Anlage sinnvoll zu realisieren.

Weiters betrifft die Erfindung ein Verfahren zum Betreiben eines Dampfkraftwerkes gemäß dem Patentanspruch 13.

Aufgabe der Erfindung ist es daher weiters ein Verfahren der eingangs genannten Art anzugeben, mit welchem die genannten Nachteile vermieden werden können, und welches einen hohen Wirkungsgrad aufweist.

Erfindungsgemäß wird dies durch die Merkmale des Patentanspruches 13 erreicht.

Die Vorteile des Verfahrens entsprechen hierbei den Vorteilen des Dampfkraftwerkes.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein herkömmliches Dampfkraftwerk als schematische Darstellung;
Fig. 2 eine Absorptionswärmepumpe als schematische Darstellung;
Fig. 3 eine erste bevorzugte Ausführungsform eines Dampfkraftwerkes als schematische Darstellung;
Fig. 4 eine zweite bevorzugte Ausführungsform eines Dampfkraftwerkes als schematische Darstellung;
Fig. 5 eine dritte bevorzugte Ausführungsform eines Dampfkraftwerkes als schematische Darstellung; und
Fig. 6 eine vierte bevorzugte Ausführungsform eines Dampfkraftwerkes als schematische Darstellung.

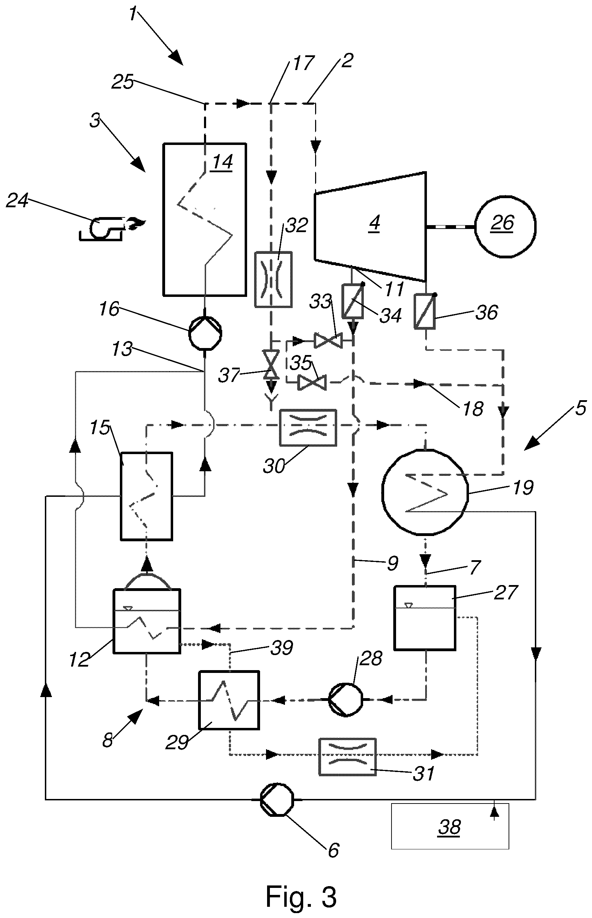

Die Fig. 3 bis 6 zeigen bevorzugte Ausführungsformen eines Dampfkraftwerkes 1 mit einem Arbeitsmittelkreislauf 2 für ein Arbeitsmittel, wobei der Arbeitsmittelkreislauf 2 - in Flussrichtung des Arbeitsmittels betrachtet - ein erstes Wärmetauschersystem 3 zum Verdampfen des Arbeitsmittels, ein Dampfturbinensystem 4, ein zweites Wärmetauschersystem 5 zum Kondensieren des Arbeitsmittels und ein Arbeitsmittelpumpsystem 6 umfasst. Das erste Wärmetauschersystem 3 ist vorgesehen das Arbeitsmittel mit Wärmeenergie zu versorgen, bis dieses zumindest verdampft. Umgekehrt ist das zweite Wärmetauschersystem 5 vorgesehen, das Arbeitsmittel derart abzukühlen, bis es zumindest kondensiert. Als Arbeitsmittel kann besonders bevorzugt Wasser verwendet werden.

Vorgesehen ist, dass wenigstens ein Kältemittelkreislauf 7 einer Absorptionswärmepumpe 8 zumindest teilweise das erste Wärmetauschersystem 3 und zumindest teilweise das zweite Wärmetauschersystem 5 umfasst, wobei die Absorptionswärmepumpe 8 zum Verbringen von Wärmeenergie von dem zweiten Wärmetauschersystem 5 zu dem ersten Wärmetauschersystem 3 ausgebildet ist, und dass eine Austreibungsleitung 9 von einer Turbinenanzapfung 11 des Dampfturbinensystems 4 über ein Austreibersystem 12 der Absorptionswärmepumpe 8 zu einer Einspeisung 13 in den Arbeitsmittelkreislauf 2 führt, wobei das Arbeitsmittel in der Austreibungsleitung 9 Wärmeenergie für einen Austreibungsprozess der Absorptionswärmepumpe 8 bereitstellt.

Weiters ist ein Verfahren zum Betreiben eines Dampfkraftwerkes 1 im Regelbetrieb vorgesehen, wobei in einem Arbeitsmittelkreislauf 2 ein Arbeitsmittel in einem ersten Wärmetauschersystem 3 verdampft und einem Dampfturbinensystem 4 zugeführt wird, wobei das Arbeitsmittel nach dem Dampfturbinensystem 4 in einem zweiten Wärmetauschersystem 5 kondensiert und über ein Arbeitsmittelpumpsystem 6 wieder dem ersten Wärmetauschersystem 3 zugeführt wird, dadurch gekennzeichnet, dass mittels wenigstens einem Kältemittelkreislauf 7 einer Absorptionswärmepumpe 8 Wärmeenergie von dem zweiten Wärmetauschersystem 5 zu dem ersten Wärmetauschersystem 3 verbracht wird, dass bei einer Turbinenanzapfung 11 ein Teil des Arbeitsmittels aus dem Dampfturbinensystem 4 in eine Austreibungsleitung 9 abgezweigt, in einem Austreibersystem 12 der Absorptionswärmepumpe 8 verflüssigt und bei einer Einspeisung 13 wieder in den Arbeitsmittelkreislauf 2 rückgeführt wird, wobei durch diesen Teil des Arbeitsmittels Wärmeenergie für einen Austreibungsprozess der Absorptionswärmepumpe 8 bereitgestellt wird.

Thermodynamische Kreisprozesse sind sowohl als linkslaufende, als auch als rechtslaufende Prozesse bekannt. Rechtslaufende Prozesse werden vorwiegend für den Betrieb von Kraft- und Arbeitsmaschinen in Wärmekraftanlagen wie Kraftwerken, linkslaufende Prozesse für Wärmepumpen- oder Kältemaschinenprozesse zum Einsatz gebracht. Die als linkslaufend oder rechtslaufend bezeichneten Prozesse beziehen sich hinsichtlich dieser Richtungsangabe auf die übliche thermodynamische Richtungsangabe und nicht auf die Strömungsrichtung des jeweiligen Arbeitsmittels.

Als vorteilhaft erweist sich die Kombination thermodynamisch linkslaufender Absorbtionswärmepumpenprozesse in dem Kältemittelkreislauf 7 mit einem thermodynamisch rechtslaufenden Clausius Rankine Kreisprozess in dem Arbeitsmittelkreislauf 2. Nämlich derart, dass die Verlustwärmeenergie des Arbeitsmittelkreislaufes 2 in dem zweiten Wärmetauschersystem 5, welche bisher mittels Kühlmedien abgeführt wurde, nun zum Verdampfen eines dafür geeigneten Kältemittels und somit zum Betrieb eines linkslaufenden Kreisprozesses genützt werden kann, aus dem rechtslaufenden Kreisprozess, welcher für den Betrieb von Kraft- oder Arbeitsmaschinen als Basis zugrunde liegt, an einer dafür geeigneten Stelle, nämlich dem zweiten Wärmetauschersystem 5 entnommen wird. Danach wird die entnommene Verlustwärme wiederum an einer anderen geeigneten Stelle des selben thermodynamischen rechtslaufenden Kreisprozesses aus dem diese Wärme stammt, unter zusätzlicher Erhöhung des Energiegehalts des Absorptionswärmepumpenkreisprozesses, in den rechtslaufenden Kreisprozess zurückgeführt, nämlich beim ersten Wärmetauschersystem 3, wodurch der Wirkungsgrad des dadurch entstandenen neuen kombinierten, zeitgleich, gekoppelt mit getrennten Stoffströmen, der beiden zur Anwendung kommenden Kreisprozesse, betriebenen Gesamtprozesses erhöht wird.

Dadurch kann der Wirkungsgrad des Dampfkraftwerkes 1 erhöht und damit Emissionen des Dampfkraftwerkes 1 vermieden werden. Weiters können herkömmliche Kühlsysteme wie beispielsweise Flusswasserkühlung, Trockenkühlsysteme, Luftkühler oder Kühltürme, je nach Umfang der Ausführung der Erfindung, teilweise oder gänzlich vermieden respektive ersetzt werden. Durch die Absorptionswärmepumpe 8 kann die Kondensationswärme zumindest zum Teil rückgewonnen werden. Hierbei kann der durch das Austreibersystem der Absorptionswärmepumpe 8 zusätzliche verursachte Energiebedarf der Absorptionswärmepumpe 8 durch das Arbeitsmittel aus dem Arbeitsmittelkreislauf 2 selber bereitgestellt werden. Durch die Turbinenanzapfung 11 wird ein Dampf für das Austreibersystem 12 verwendet, welcher bereits einen Teil seiner verfügbaren Energie in dem Dampfturbinensystem 4 abgeben konnte, wodurch die zur Stromgewinnung zur Verfügung stehende Energie nur geringfügig verringert wird. Dadurch bleibt der zusätzliche Energieaufwand für die Absorptionswärmepumpe 8 geringer als die durch die Absorptionswärmepumpe rückgewonnene und nutzbare Kondensationswärme. Dadurch kann ein Gesamtsystem bereit gestellt werden, welches insgesamt einen erhöhten Wirkungsgrad aufweist und einfach realisierbar ist. Mit der vorliegenden Erfindung ist es auch möglich den Regelbetrieb einer derart ausgebildeten Anlage sinnvoll zu realisieren.

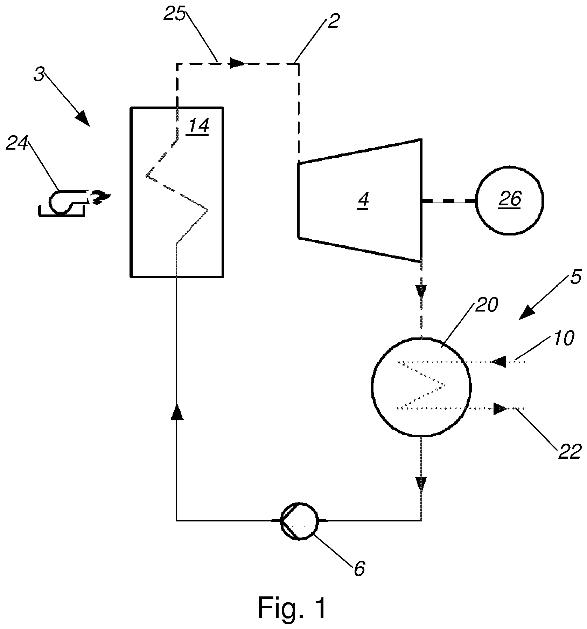

Gestrichelt dargestellte Linien, verdeutlichen in den Fig. 1 bis 6 jede Art des dampfförmigen Arbeitsmittels, insbesondere Wasserdampf, und dessen Rohrleitungs- und Transportsysteme. Durchgezogen dargestellte Linien, verdeutlichen in den nachfolgenden Darstellungen jede Art des kondensierten Arbeitsmittels aus dem Arbeitsmittelkreislauf 2 und dessen Rohrleitungs- und Transportsysteme. Kurzstrichpunktiert dargestellte Linien, verdeutlichen in den nachfolgenden Darstellungen jede Art des dampfförmigen Kältemittels und dessen Rohrleitungs- und Transportsysteme. Langstrichpunktiert dargestellte Linien, verdeutlichen in den nachfolgenden Darstellungen jede Art des kondensierten Kältemittels und dessen Rohrleitungs- und Transportsysteme. Enggepunktet dargestellte Linien, verdeutlichen in den nachfolgenden Darstellungen jede Art des Kühlwassers und dessen Rohrleitungs- und Transportsysteme. Doppelkurzgestrichelt dargestellte Linien, verdeutlichen in den nachfolgenden Darstellungen jede Art von einer stark angereicherten Lösungen mit Kältemittel und Kältelösungsmittel und dessen Rohrleitungs- und Transportsysteme, also sogenannte starke Lösungen.

Kurzgestrichelt dargestellte Linien, verdeutlichen in den nachfolgenden Darstellungen jede Art schwach angereicherter Lösungen oder nur noch des Lösungsmittels einer Kältemittellösung und dessen Rohrleitungs- und Transportsysteme, also sogenannte arme Lösungen. Schwarz dargestellte Pfeile, kennzeichnen die Flussrichtung eines Systemmediums in dessen zugehörigem System.

In Fig. 1 bis 6 sind bekannte Details von Dampfkraftwerken wie Speisewasserbehälter, Speisewasservorwärmer und dergleichen der Übersichtlichkeit halber nicht dargestellt, können aber bei Bedarf eingesetzt werden.

Fig.1 zeigt, in einer als Prozessschaltbild dargestellten Form, einen vereinfachten herkömmlichen Arbeitsmittelkreislauf 2, welcher als rechtslaufender thermodynamischer Clausius Rankine Kreisprozess betrieben werden kann und wie er bekannten thermisch betriebenen Anlagen wie beispielsweise Wärmekraftwerken, KWK- Kraft- Wärmekopplungsanlagen, sogenannten GuD- Gas- und Dampfturbinenkraftwerken, als vereinfachter Grundprozess zugrunde liegt. Darüber hinausgehende, beispielsweise Wirkungsgrad verbessernde Zusatzaggregate wie Speisewasservorwärmer, Zwischenüberhitzer, aber auch systemrelevante Aggregate wie Speisewasserbehälter und so weiter, werden aufgrund der Bekanntheit in den nachfolgenden Beschreibungen für Fig.1 bis Fig.6 nicht dargestellt, da dies die Übersichtlichkeit der Beschreibung der Erfindung zu sehr einschränken würde.

In Fig. 1 fördert das Arbeitsmittelpumpsystem 6 das Kondensat des Wasserdampfes, welches bevorzugt als Wärmeträger und Arbeitsmittel des vorliegenden rechtslaufenden thermodynamischen Clausius Rankine Kreisprozesses dient, unter Druckerhöhung, dieses zum ersten Wärmetauschersystem 3, und stellt es diesem als sogenanntes Speisewasser zur Verfügung. In Fig. 1 umfasst der erste Wärmetauscher 3 lediglich ein Dampferzeugersystem 14.

Ein Heizenergiezufuhrsystem 24 liefert in Fig. 1 die erforderliche Wärmeenergie zur Erzeugung des Wasserdampfes im Dampferzeugersystem 14. Das Heizenergiezufuhrsystem 24 steht für jede Art von Brennstoff- respektive Heizenergiezufuhrsystem, zum Zwecke der Erzeugung und Zufuhr von Heizwärme für ein damit beheiztes Dampferzeugersystem 14. Hierfür kann beispielsweise auch Abwärme von Gasturbinenabgas genützt werden und somit ist auch dieses darunter verstanden. Das Heizenergiezufuhrsystem 24 steht somit für jede Form von Wärmezufuhrsystem zur Erzeugung von dampfförmigen Arbeitsmittel. Im Dampferzeugersystem 14 wird nun durch Zufuhr von Wärmeenergie das Kondensat, vor dem Dampferzeugersystem 14 auch Speisewasser genannt, verdampft und Wasserdampf mit höherem Druck und Temperatur als in dem zweiten Wärmetauschersystem 5, welches in Fig. 1 lediglich eine Kühlwasserkondensationseinheit 20 umfasst, erzeugt.

Durch eine Frischdampfleitung 25 strömt der erzeugte Wasserdampf schließlich zum Dampfturbinensystem 4. Das Dampfturbinensystem 4 steht für jede Art von Dampfturbinensystem oder mit Dampf betriebenem Kraftmaschinensystem zum Zwecke der Umwandlung thermischer, kinetischer und potenzieller Energie in mechanische Energie. Mit dem Dampfturbinensystem 4 wird ein Teil der Energie des erzeugten Wasserdampfes in mechanische Energie umgewandelt und an ein Arbeitsmaschinensystem oder ein Generatorsystem 26, welches an das Dampfturbinensystem 4 gekoppelt ist, übertragen und wodurch dieser übertragene Energieanteil größtenteils technisch nutzbar gemacht wird. Das Generatorsystem 26 steht für jede Art von an ein Kraftmaschinensystem gekoppeltes Generatorsystem, oder anderes Arbeitsmaschinensystem, zum Zwecke der Erzeugung elektrischer Energie oder der Verrichtung mechanischer Arbeit.

Nach dem Dampfturbinensystem 4 strömt Wasserdampf niedrigerer Temperatur und niedrigen Drucks als vor dem Dampfturbinensystem 4 aus diesem in das zweite Wärmetauschersystem 5 um zu kondensieren. Im zweiten Wärmetauschersystem 5 wird der Wasserdampf schließlich kondensiert wodurch der Aggregatszustand des Wasserdampfes von dampfförmig in flüssig vollzogen wird.

Diese Kondensation erfolgt in Fig. 1 bei einem herkömmlichen Dampfkraftwerk 1 mithilfe von Kühlwasser oder anderer Kühlmedien wie beispielsweise Luft. Das Kühlmedium strömt dafür über eine Kühlwasservorlaufleitung 10 in das zweite Wärmetauschersystem 5 ein, nimmt dann im zweiten Wärmetauschersystem 5 größtenteils die Verdampfungswärme respektive Kondensationswärme des Wasserdampfes auf, wodurch der eingeleitete Wasserdampf seinen Aggregatszustand von dampfförmig zu flüssig verändert. Die aufgenommene Wärme welche sich nun im Kühlmedium befindet wird durch eine Kühlwasserrücklaufleitung 22 aus dem Prozess ausgekoppelt und häufig verworfen. Die Rückführung dieser Verlustwärme ist bisher in den allermeisten Anlagen nicht der Fall, da die Wärme in einer nicht mehr technisch sinnvoll nutzbaren Form hinsichtlich ihrer thermodynamischen Zustandsgrößen vorliegt. Dieser Aspekt ist verantwortlich für den größten thermodynamischen Verlust des gesamten rechtslaufenden Clausius Rankine Kreisprozesses in dem Arbeitsmittelkreislauf 2. Nach dem zweiten Wärmetauschersystem 5 wird das flüssige Kondensat des Wasserdampfes mit Hilfe des Arbeitsmittelpumpsystems 6 wieder dem Prozess rückgeführt und der Kreislauf des Arbeitsmittels beginnt erneut, wobei der ausgekoppelte Verlustwärmeinhalt an die Umgebung verloren geht.

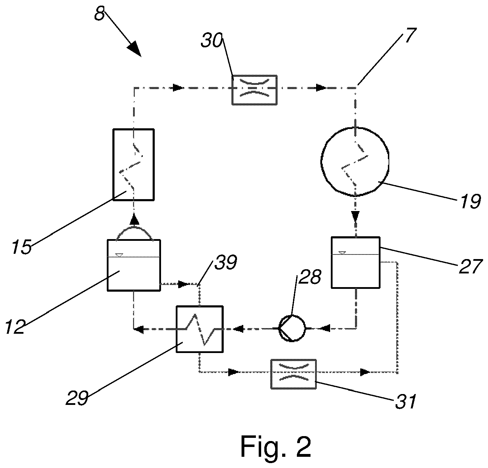

Fig.2 zeigt exemplarisch, in einer als Prozessschaltbild dargestellten Form, eine bekannte Absorptionswärmepumpe 8. Dabei wird das Kältemittel mittels externer Wärmezufuhr eines zu kühlenden Stoffstroms in einer Verdampfungseinheit 19 verdampft. Der Kältemitteldampf wird danach in ein Absorbersystem 27 geführt, wo er mit einem geeigneten Lösungsmittel in Lösung gebracht wird. Die starke Lösung, bevorzugt Ammoniak mit Wasser, aber auch andere bekannte Lösungen zum Betrieb von Absorptionswärmepumpen 8, wird danach mittels eines geeigneten Lösungsmittelpumpsystems 28 angesaugt und in ein, insbesondere als Zweistromwärmetauscher ausgebildetes, Lösungswärmeaustauschsystem 29 geleitet, wo die arme Lösung, welche aus dem Austreibersystem 12 über die Rücklaufleitung 39 zugeführt wird, an die angereicherte Lösung weitere Wärme überträgt. Danach strömt die zusätzlich mit Wärme aufgeladene reiche Lösung in das anschließende Austreibersystem 12, welches mit Zufuhr externer Energie betrieben wird. Dabei wird im Austreibersystem 12 das Kältemittel aus der gesättigten Lösung thermisch ausgetrieben und der Druck, Temperatur und Energieinhalt des Kältemittels erhöht, welches nun dampfförmig vorliegt. Dieser Kältemitteldampf wird danach einer Verflüssigungseinheit 15 zugeführt, welches zeitgleich auch als Wärmeaustauscher zur Wärmeübertragung an einen externen zu heizenden Stoffstrom, dient. Dabei wird die zuvor eingebrachte Wärme an diesen externen Stoffstrom übertragen und zeitgleich in der Verflüssigungseinheit 15 der Kältemitteldampf ebenfalls kondensiert. Die abzuführende Wärme wird vom beheizten Stoffstrom abgeführt. Das ungesättigte Lösungsmittel wird in Form einer armen Lösung aus dem Austreibersystem 12 über die Rücklaufleitung 39 und das Lösungswärmetauschersystem 29, wo es seine Nutzwärme abgibt, abgeleitet. Ein Lösungsmitteldrosselsystem 31 drosselt die arme Lösung derart, dass diese über die Rücklaufleitung 39 in das Absorbersystem 27 rückgeführt werden kann, um erneut Kältemittel zu absorbieren und somit die nicht angereicherte, arme Lösung in eine angereicherte, starke Lösung umzuwandeln. Das kondensierte Kältemittel wird ebenfalls einem Kältemitteldrosselsystem 30 zugeführt und derart thermodynamisch gedrosselt, dass es wieder seinem Ausgangszustand entspricht. Danach wird es der Verdampfungseinheit 19 zugeführt, um neuerlich Wärme aus dem extern zu kühlenden Stoffstrom zu entziehen und dabei zu verdampfen und zur weiteren immer wieder wiederholbaren Wärmeaufnahme zur Verfügung zu stehen.

Der Erfindung liegt nun die Idee zugrunde, Verlustwärmeenergie eines rechtslaufenden thermodynamischen Kreisprozesses, zum Betrieb von Kraft- und oder Arbeitsmaschinen, wieder zu verwenden. Diese lag bisher aufgrund der Tatsache, dass sie hinsichtlich der thermodynamischen Eigenschaften des Mediums Wasser als Folge der Kondensationsnotwendigkeit des Wasserdampfes in der Kühlwasserkondensationseinheit 20 des zweiten Wärmetauschersystems 5 für den Betrieb des rechtslaufenden Clausius Rankine Prozesses, nach der Kondensation in einer thermodynamisch nicht sinnvoll wieder zu verwendenden Form vor. Sie blieb überwiegend ungenutzt und wurde mittels Kühlmedium an die Umgebung abgeführt. Die Wiederverwendung der Verlustwärme wird dadurch erreicht, indem man wie zuvor beschrieben den rechtslaufenden Kreisprozess mit einem oder mehreren parallel geschalteten linkslaufenden Kreisprozesse, welche als Absorptionswärmepumpe 8 betrieben werden, in dem ersten Wärmetauschersystem 3 und dem zweiten Wärmetauschersystem 5 gekoppelt, zeitgleich im Regelbetrieb betreibt und die dann wiederzuverwendende Wärme, an der dafür geeigneten Stelle, mittels dem oder der linkslaufenden Kreisprozesse, aus dem rechtslaufenden Kreisprozess entnimmt und mit Hilfe des oder der linkslaufenden Kreisprozesse, welche als Absorptionswärmepumpe 8 betrieben werden, die thermodynamischen Zustandsgrößen des Kältemittels in geeigneter Weise verändert, sodass die entnommene Wärme des rechtslaufenden Kreisprozesses diesem Clausius Rankine Prozess selbst, mithilfe der Absorptionswärmepumpe 8, an einer dafür geeigneten Stelle, zurück führt.

Dabei wird die zum Austreiben des Kältemittels benötigte Wärme bei regulärem Betrieb der Anlage einer Turbinenanzapfung 11 entnommen. Die Entnahmestelle ist hierbei derart gewählt, dass der erforderliche Entnahmedampfenergiegehalt für den Betrieb des Austreibersystems 12 zur Verfügung steht. Insbesondere kann vorgesehen sein, dass der Entnahmedruck bei der Turbinenanzapfung 11 höher ist als der Druck des kondensierten Arbeitsmittels für die Kesselspeisung in dem ersten Wärmetauscher 3, damit das Arbeitsmittel nach Durchlaufen des Austreibersystems 12 in den Arbeitsmittelkreislauf 2 des rechtslaufenden Kreisprozesses zurückgeführt werden kann.

Besonders bevorzugt kann vorgesehen sein, dass das zweite Wärmetauschersystem 5 die Verdampfungseinheit 19 des Kältemittelkreislaufes 7 aufweist. Insbesondere kann die Verdampfungseinheit 19 als Wärmetauscher ausgebildet sein, bei welcher der Arbeitsmittelkreislauf 2 mit der Primärseite der Verdampfungseinheit 19, und der Kältemittelkreislauf 7 mit der Sekundärseite der Verdampfungseinheit 19 verbunden ist.

Vorzugsweise kann vorgesehen sein, dass das erste Wärmetauschersystem 3 das Dampferzeugersystem 14 des Arbeitsmittelkreislaufes 2 und die Verflüssigungseinheit 15 des Kältemittelkreislaufes 7 aufweist, und dass die Verflüssigungseinheit 15 als Wärmetauscher zwischen Arbeitsmittelkreislauf 2 und Kältemittelkreislauf 7 ausgebildet ist. In dem ersten Wärmetauschersystem 3 kann daher das Arbeitsmittel in der Verflüssigungseinheit 15 vorgewärmt und anschließend in dem Dampferzeugersystem 14 verdampft werden.

Weiters kann vorgesehen sein, dass die Einspeisung 13 der Austreibungsleitung 9 in den Arbeitsmittelkreislauf 2 zwischen dem Dampferzeugersystem 14 und der Verflüssigungseinheit 15 angeordnet ist. Hierbei ist die Rückeinspeisung des Arbeitsmittels aus der Austreibungsleitung 9 an dieser Stelle energetisch besonders vorteilhaft.

Insbesondere kann vorgesehen sein, dass ein weiteres Arbeitsmittelpumpsystem 16 zwischen der Einspeisung 13 der Austreibungsleitung 9 in den Arbeitsmittelkreislauf 2 und dem Dampferzeugersystem 14 angeordnet ist. Dadurch kann das Arbeitsmittel zuverlässig auf die zu Einspeisung in das Dampferzeugersystem 14 notwendigen Druck gebracht werden. Sollte das Arbeitsmittelpumpsystem 6 groß genug dimensioniert werden können und die Drücke in den Heizdampfentnahmen an der Turbinenanzapfung 11 und/der der Frischdampfanzapfung 17 dies zulassen, ist der Entfall des weiteren Arbeitsmittelpumpsystems 16 möglich.

Zusätzlich kann zum Anfahren und Abfahren des Dampfkraftwerkes 1, solange das Dampfturbinensystem 4 noch nicht in Betrieb ist, oder im Störfall als Redundanz, das Austreibersystem 12 mittels Frischdampfentnahme aus der Frischdampfleitung 25 versorgt werden. Die Umschaltung auf den Regelbetrieb sollte vorzugsweise so rasch als möglich erfolgen, da der Frischdampf energetisch höherwertig ist als der Dampf aus der Turbinenanzapfung 11 und somit bis zum Erreichen der Turbinenanzapfung 11 energetisch in dem Dampfturbinensystem 4 genutzt werden kann, sodass sich ein höherer Gesamtwirkungsgrad der Anlage einstellt als bei Betrieb des Austreibersystems 12 mittels Frischdampf. Durch die Anordnung sowohl der Frischdampfanzapfung 17 als auch der Turbinenanzapfung 11 kann der Energieverbrauch beim Anfahrbetrieb und oder Abfahrbetrieb des Dampfkraftwerkes 1 gering gehalten werden. Weiters ergibt sich dadurch der Vorteil, dass bei einem Lastwechsel des Dampfkraftwerkes 1, wie dieses durch den vermehrten Einsatz von erneuerbarer Energie in den Netzen häufiger notwendig wird, die Absorptionspumpe 8 flexibel betrieben werden kann, wodurch die Absorptionspumpe 8 nicht auf eine konstante Last des Dampfkraftwerkes 1 angewiesen ist.

Hierbei kann vorgesehen sein, dass die Austreibungsleitung 9 eingangseitig zusätzlich zu der Turbinenanzapfung 11 eine vorgebbar verschließbare Frischdampfanzapfung 17 aufweist, welche Frischdampfanzapfung 17 zwischen dem ersten Wärmetauschersystem 3 und dem Dampfturbinensystem 4 angeordnet ist. Hierbei kann vorgesehen sein, dass die vorgebbar verschließbare Frischdampfanzapfung 17 mittels eines Frischdampfanzapfungsventils 33 verschließbar ist, um später auf die Turbinenanzapfung 11 umschalten zu können.

Weiters kann die Frischdampfanzapfung 17 mit einer Frischdampfanzapfungsdrossel 32 versehen sein, um den Frischdampfzustand an das Austreibersystem 12 anzupassen. Eine Drossel ist eine Vorrichtung zur Systemdruckregelung und thermodynamischen Drosselung von Systemmedien.

Bevorzugt kann für die Frischdampfanzapfungsdrossel 32 eine Dampfumformungsstation eingesetzt werden, um sowohl den Druck als auch die Temperatur zu regeln. Das für die Dampfumformungsstation verwendete Einspritzwasser kann insbesondere aus Arbeitsmittelkreislauf 2, bevorzugt zwischen Arbeitsmittelpumpsystem 6 und dem Dampferzeugersystem 14, entnommen werden.

Insbesondere kann bei einer Frischdampfanzapfung 17 vorgesehen sein, dass die Turbinenanzapfung 11 mit einem ersten Rückstromsicherungssystem 34 versehen ist. Das Rückstromsicherungssystem 34 steht für jede Art von Rückstromsicherungssystem zum Zwecke der Verhinderung der falschen Strömungsrichtung von Systemmedien, in diesem Fall des Arbeitsmittels des Arbeitsmittelkreislaufes 2.

Weiters kann vorgesehen sein, dass von der Frischdampfanzapfung 17 eine vorgebbar verschließbare Bypassleitung 18 des Arbeitsmittelkreislaufes 2 zu dem zweiten Wärmetauschersystem 5 führt. Die Bypassleitung 18 kann mittel eines Bypassventils 35 verschlossen werden. Weiters kann ein zweites Rückstromsicherungssystem 36 in dem Arbeitsmittelkreislauf 2 nach dem Dampfturbinensystem 4 angeordnet sein, um Frischdampf aus der Bypassleitung 18 daran zu hindern in den Ausgang des Dampfturbinensystems 4 zu gelangen.

Weiters kann bei dem Verfahren vorgesehen sein, dass in dem Anfahrbetrieb und oder Abfahrbetrieb des Dampfkraftwerkes 1 das Arbeitsmittel an dem Dampfturbinensystem 4 vorbei zu dem zweiten Wärmetauschersystem 5 und/oder dem Austreibersystem 12 der Absorptionswärmepumpe 8 geführt wird. Hierbei wird das Arbeitsmittel an dem Dampfturbinensystem 4 vorbei geführt.

Zusätzlich kann bis zum Erreichen von vorgesehenen Dampfparametern des verdampften Arbeitsmittels oder im Störfall zumindest Teile des verdampften Arbeitsmittels aus dem Arbeitsmittelkreislauf 2 über ein Auslassventil 37 an die Umgebung abgeführt werden, wobei insbesondere über eine externen Prozesswasserversorgung 38 der über das Auslassventil 37 abgegebene Massestrom an Arbeitsmittel aus dem Arbeitsmittelkreislauf 2 ausgeglichen wird. Die vorgesehenen Dampfparametern des verdampften Arbeitsmittels, insbesondere Druck und Temperatur, können bevorzugt derart gewählt sein, dass diese zum Betrieben des Austreibersystems 12 ausreichend sind. Bevorzugt ist hier ein Absolutdruck größer als 1 [bar_{abs}] vorgesehen. Der Maximaldruck an der Turbinenanzapfung ist so zu gestalten, dass der Energiegehalt des Dampfes für den Betrieb vom Austreibersystem 12 ausreicht und das Kondensat ausreicht und wie vorhin beschrieben zurückgeführt werden kann. Insbesondere kann vorgesehen sein, dass der Absolutdruck an der Turbinenanzapfung 11 um mindestens 10% geringer ist als der Eingangsdruck des Frischdampfes aus der Frischdampfleitung 25 an dem Dampfturbinensystem 25.

Weiters kann insbesondere vorgesehen sein die Dampfumformungsstation in der Austreibungsleitung 9 vor dem Austreibersystem 12 zur Druck- und Temperaturregelung anzuordnen.

Fig. 3 zeigt, in einer als Prozessschaltbild dargestellten Form, eine erste bevorzugte Ausführungsform als Kombination des linksläufigen mit des rechtsläufigen Kreisprozesses, wie sie als Gesamtprozess, mithilfe einer Absorptionswärmepumpe 8 realisierbar ist. Dabei wird das Kältemittel der Absorptionswärmepumpe 8 mittels Kondensationswärme des Abdampfes vom Dampfturbinensystem 4 aus dem Arbeitsmittelkreislauf 2 in der Verdampfungseinheit 19 des Kältemittelkreislaufes 7 verdampft. Die Verdampfungseinheit 19 ersetzt in diesem Fall die Kühlwasserkondensationseinheit 20 aus Fig. 1 und dient gleichzeitig als Verdampfungseinheit 19 für das Kältemittel der Absorptionswärmepumpe 8, welches seinen Aggregatszustand von flüssig in dampfförmig auf der Sekundärseite der Verdampfungseinheit 19 verändert, indem es dem vom Dampfturbinensystem 4 zuströmenden Dampf seine Wärme entzieht, bis auch dieser seinen Aggregatszustand von dampfförmig in flüssig auf der Primärseite von der Verdampfungseinheit 19 ändert.

Das abströmende Kondensat des Arbeitsmittels wird in der ersten bevorzugten Ausführungsform vom Arbeitsmittelpumpsystem 6 angesaugt und mittels Druckerhöhung durch das Arbeitsmittelpumpsystem 6, in Richtung Verflüssigungseinheit 15 des Kältemittelkreislaufes 7 transportiert. In diesem Kältemittelkreislauf 7 entzieht nun das Kondensat des Arbeitsmittels dem zeitgleich betrieben, überlagert, gekoppelten Absorptionswärmepumpenprozess seine aufgeladene Wärmeenergie und erhöht somit seinen Energieinhalt. Anschließend wird das so vorgewärmte Arbeitsmittel als Speisewasser mittels des weiteren Arbeitsmittelpumpsystems 16 höheren Druckes als das zuvor beschriebene Arbeitsmittelpumpsystem 6 aus angesaugt, mittels des nachgeschalteten weiteren Arbeitsmittelpumpsystems 16 druckerhöht und in das Dampferzeugersystem 14 geleitet. Durch die zuvor beschriebene Vorwärmung des Arbeitsmittels aus dem Arbeitsmittelkreislauf 2 in der Verflüssigungseinheit 15 reduziert sich somit der Brennstoffbedarf aus dem Heizenergiezufuhrsystem 24 welches die restliche Wärmeenergie bis zum Erreichen der erforderlichen Gesamtsystemauslegungswärmeleistung der Anlage zur Dampferzeugung liefert. Durch die beschriebene Vorwärmung mittels Rückgewinnung der Verdampfungswärme aus dem Abdampf des Dampfturbinensystems 4, wird der Brennstoff- respektive Heizenergiebedarf, verglichen mit herkömmlichen Prozessen wie in Fig.1 beschrieben, deutlich reduziert und der Wirkungsgrad des neuen Gesamtsystems entsprechend gesteigert. Im Dampferzeugersystem 14 ändert nun das flüssige Arbeitsmittel durch Wärmezufuhr aus dem Heizenergiezufuhrsystem 24 seinen Aggregatszustand von flüssig in dampfförmig. Das dampfförmige Arbeitsmittel tritt aus dem Dampferzeugersystem 14 als sogenannter Frischdampf aus und wird zum Dampfturbinensystem 4 geführt.

Im Dampfturbinensystem 4 wird dem Frischdampf nun soweit seine Energie entzogen, um das mechanisch gekoppelte Arbeitsmaschinensystem oder Generatorsystem 26 zu betreiben. Die hier verrichtete Nutzarbeit wird vom Generatorsystem 26 an einen Verbraucher in Form von Nutzenergie abgeführt. Der Abdampf aus dem Dampfturbinensystem 4 wird wieder an den rechtslaufenden Teil des Gesamtprozesses rückgeführt, welcher dem Arbeitsmittelkreislauf 2 entspricht.

Der diesem rechtslaufenden Teil des Gesamtprozesses im Regelbetrieb zeitgleich, gekoppelt, überlagerte linkslaufende Kreisprozess mittels Absorptionswärmepumpe 8 für die erste bevorzugte Ausführungsform funktioniert nun wie folgt. Der in der Verdampfungseinheit 19 entstandene Kältemitteldampf strömt in das Absorbersystem 27 und geht in diesem mit dem Lösungsmittel in eine angereicherte, starke Lösung über. Diese wird anschließend vom Lösungsmittelpumpsystems 28 angesaugt und druckerhöht. Danach wird die starke Lösung dem Lösungswärmeaustauschsystem 29 zugeführt, wobei in diesem bereits eine erste zusätzliche Wärmeenergieaufnahme durch Austausch mit der aus dem Austreibersystem 12 über die Rücklaufleitung 39 abfließenden ungesättigten, armen Lösung stattfindet. Die somit vorgewärmte starke Lösung höherer Energie strömt in das Austreibersystem 12, wo das in Lösung befindliche Kältemittel mit Hilfe zugeführter Wärme aus der Austreibungsleitung 9 thermisch ausgetrieben wird. Die zurück bleibende arme Lösung wird wie schon beschrieben über die Rücklaufleitung 39 abgeführt, tauscht seine Wärmeenergie im Lösungswärmeaustauschsystem 29 soweit möglich mit der starken Lösung aus und wird einem Lösungsmitteldrosselsystem 31 zugeführt. Dieses Lösungsmitteldrosselsystem 31 drosselt nun die arme Lösung soweit und leitet diese über die Rücklaufleitung 39 weiter Richtung Absorbersystem 27 ab, dass sie wieder mit dem Kältemitteldampf in eine starke Lösung übergehen kann. Der in dem Austreibersystem 12 frei werdende Kältemitteldampf wird zu der Verflüssigungseinheit 15 geleitet. In dieser Verflüssigungseinheit 15 tauscht der Kältemitteldampf seinen Wärmeenergieinhalt soweit an das Kondensat des Arbeitsmittels des Arbeitsmittelkreislaufes 2 aus, bis dieser kondensiert. Anschließend wird das Kältemittelkondensat zu einem Kältemitteldrosselsystem 30 geleitet, welches wiederum das zufließende Kältemittelkondensat soweit drosselt dass es danach der Verdampfungseinheit 19 zugeführt, wieder seine thermischen Zustandsgrößen wie zum Ausgangszeitpunkt des Systemdurchlaufs erreicht, womit der linkslaufende Kreisprozess des Kältemittelkreislaufes 7 geschlossen wird indem es wieder verdampft werden kann. Der überlagerte linkslaufende Prozess beginnt danach wieder mit der Verdampfung des Kältemittels unter Zufuhr von Wärmeenergie aus dem Abdampf des Dampfturbinensystems 4.

Um nun die benötigte Wärmeenergie zum thermischen Austreiben des Kältemittels im Austreibersystem 12 zur Verfügung zu stellen, ist im Regelbetrieb eine Entnahme des Heizdampfes aus einer Turbinenanzapfung 11 aus dem Dampfturbinensystem 4 vorgesehen. Zusätzlich kann der dafür benötigte Anteil des im Dampferzeugersystem 14 erzeugten Wasserdampfes des Gesamtsystems aus der Frischdampfleitung 25 zum Dampfturbinensystem 4 abgezweigt werden. Eine systemexterne Dampfzufuhr ist ebenfalls eine realisierbare Möglichkeit, wird hier jedoch nicht explizit dargestellt. Alle drei oder auch beide dargestellten Varianten können auch zeitgleich aus Redundanzgründen realisiert werden.

Vorzugsweise kann das erste Rückstromsicherungssystem 34 an der Turbinenanzapfung 11 vorgesehen sein, damit der Dampf des Dampferzeugersystems 14 aufgrund seines höheren Druckes nicht über die Turbinenanzapfung 11 in das Dampfturbinensystem 4 strömen kann.

Der entnommene Heizdampf zum Betrieb des Austreibersystems 12 wird diesem zugeführt, ändert seinen Aggregatszustand im Austreibersystem 12 von dampfförmig auf flüssig und wird anschließend als Kondensat in den Arbeitsmittelkreislauf 2 zurückgeführt. Der Vorteil der Turbinenanzapfung 11 liegt darin dass der thermodynamisch betrachtet hochwertige Frischdampf bis zum Erreichen der Anzapfparameter an der Turbinenanzapfung 11 für die Nutzbarmachung der Energie mittels Arbeitsmaschine und/oder Generatorsystem 26 genützt werden kann. Dadurch wird der Gesamtwirkungsgrad der Gesamtanlage deutlich verbessert.

Die Turbinenanzapfung 11 ist so auszulegen, dass der Entnahmedampf einen genügend hohen Energieinhalt aufweist um das Austreibersystem 12 zu betreiben und das in dem Austreibersystem 12 entstehende Kondensat über die Einspeisung 13 dem Arbeitsmittelkreislauf 2 wieder zugeführt werden kann. Bei der Auslegung der Turbinenanzapfung 11 ist zu berücksichtigen dass der Entnahmedampf vom Vollbetrieb bis zum Erreichen der Mindestlast des Dampfturbinensystems 4 die Versorgung von dem Austreibersystem 12 ermöglicht. Bevorzugt ist hier ein Absolutdruck größer 1 [bar_{abs}] vorgesehen. Der Maximaldruck an der Turbinenanzapfung 11 ist so zu gestalten dass der Energiegehalt des Dampfes für den Betrieb vom Austreibersystem 12 ausreicht und das Kondensat wie vorhin beschrieben zurückgeführt werden kann.

Insbesondere kann vorgesehen sein, dass der Absolutdruck an der Turbinenanzapfung 11 um mindestens 5%, bevorzugt 10%, besonders bevorzugt 15%, geringer ist als ein Eingangsdruck des Frischdampfes aus der Frischdampfleitung 25 an dem Dampfturbinensystem 4.

Um das Dampfkraftwerk 1 anfahren oder abstellen zu können, kann noch vor dem Erreichen der notwendigen Frischdampfparameter in der Frischdampfleitung 25, welche das Anstoßen des Dampfturbinensystems 4 ermöglichen, oder beim Abstellen des Dampfturbinensystems 4, oder bei Störfällen, der Frischdampf über ein Auslassventil 37 verworfen, oder über die Bypassleitung 18 mittels des vorgebbar absperrbaren Bypassventils 35 zum zweiten Wärmetauscher 5 geleitet werden. Bei der Benützung der Bypassleitung 18 ist bevorzugt das zweite Rückstromsicherungssystem 36 vorgesehen, so dass kein Dampf rückwärts in das Dampfturbinensystem 4 strömen kann. Im Regelbetrieb bleibt die Bypassleitung 18 verschlossen. Solange Dampf über das Auslassventil 37 verworfen wird ist aus einer externen Prozesswasserversorgung 38 die Verwurfdampfmenge in selber Menge zu ersetzen. Ein Parallelbetrieb von dem Auslassventil 37 zum Verwerfen des Frischdampfes und der Bypassleitung 18 ist möglich und zum Anfahren und Abstellen des Dampfkraftwerkes 1 vorgesehen.

Beim Betrieb der Bypassleitung 18 kann die eingebrachte Wärme in dem zweiten Wärmetauschersystem 5 durch den Betrieb des Kältemittelkreislaufes 7 abgeführt werden, wobei die Austreibungsleitung 9 über das geöffnete Frischdampfanzapfungsventil 33 versorgt wird.

Durch die vorliegende erste bevorzugte Ausführungsform des Dampfkraftwerkes 1 als Überlagerung eines rechtslaufenden mit einem linkslaufenden Kreisprozess entsteht somit ein neuartiger Gesamtprozess, dessen Wirkungsgrad deutlich über jenem aus Fig.1 liegt. Der Einsatz der Absorptionswärmepumpe 8 im Vergleich zu einer Kompressionswärmepumpe bietet den Vorteil, dass größere Stoffströme technisch einfacher realisierbar übertragen werden können. Zusätzlich wird bei dieser ersten Ausführungsform die Kühlwasserkondensationseinheit 20 aus Fig. 1 vollständig ersetzt.

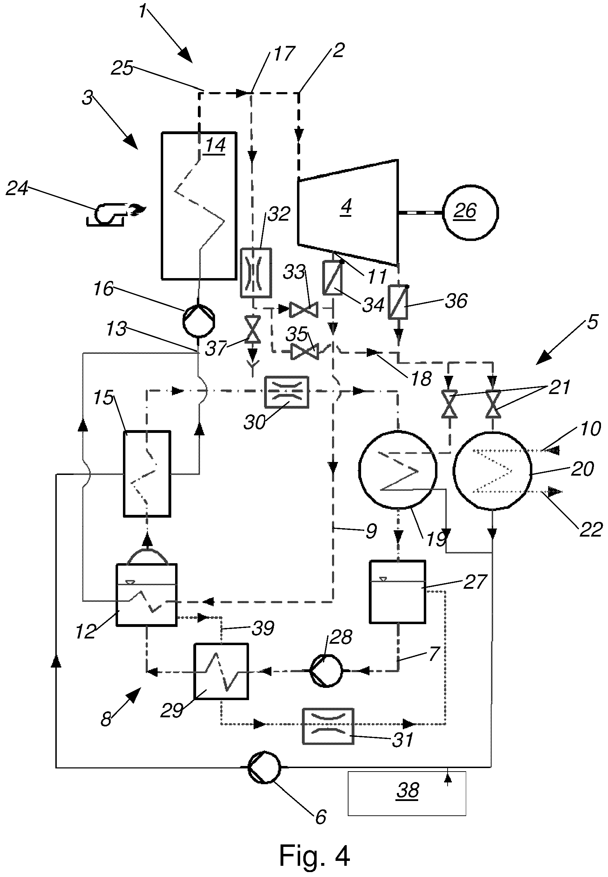

Bevorzugt kann weiters vorgesehen sein, dass das zweite Wärmetauschersystem 5 eine Kühlwasserkondensationseinheit 20 des Arbeitsmittelkreislaufes 2 aufweist. Dies ist beispielhaft in der zweiten bevorzugten Ausführungsform in Fig. 4 dargestellt. Hierbei kann das zweite Wärmetauschersystem 5 insbesondere sowohl eine Verdampfungseinheit 19 als auch die Kühlwasserkondensationseinheit 20 enthalten. Dadurch kann die Absorptionswärmepumpe 8 bezüglich der Kapazität kleiner ausgeführt werden, und/oder das Dampfkraftwerk 1 kann bessere Lastwechsel durchführen, da schnell auftretende Kondensationswärme einfach über das Kühlwasser abgeführt werden kann.

Hierbei kann vorgesehen sein, die Verdampfungseinheit 19 und die Kühlwasserkondensationseinheit 20 hinsichtlich der Wärmeaustauschkapazität im Wesentlichen gleich groß auszubilden. Dadurch kann im Störfall eine vollständige Redundanz sichergestellt werden.

Weiters kann vorgesehen sein, die Wärmeaustauschkapazität der Kühlwasserkondensationseinheit 20 lediglich so groß auszubilden, dass diese für den Anfahrbetrieb ausreichend ist. Dadurch kann sichergestellt werden, dass die Kondensationswärme im Anfahrbetrieb abgeführt werden kann, während diese im Regelbetrieb zumindest hauptsächlich über die Verdampfungseinheit 19 abgeführt wird.

Bevorzugt kann vorgesehen sein, dass der Arbeitsmittelkreislauf 2 in dem zweiten Wärmetauschersystem 5 parallel durch die Verdampfungseinheit 19 des Kältemittelkreislaufes 7 und die Kühlwasserkondensationseinheit 20 führt. Dabei kann sich der Arbeitsmittelkreislauf 2 nach dem Dampfturbinensystem 4 in mehrere Leitungen aufteilen, welche parallel durch die Verdampfungseinheit 19 und die Kühlwasserkondensationseinheit 20 führen, wobei der Arbeitsmittelkreislauf 2 anschließend wieder zusammengeführt wird. Dadurch kann sich das Arbeitsmittel des Arbeitsmittelkreislaufes 2 nach dem Dampfturbinensystem 4 in mehrere Leitungen aufteilen, wobei das parallele Durchströmen des Dampfes aus dem Arbeitsmittelkreislauf 2 durch die Verdampfungseinheit 19 und die Kühlwasserkondensationseinheit 20 gewährleistet wird, wobei der Arbeitsmittelkreislauf 2 anschließend nach dem Austritt aus der Verdampfungseinheit 19 und der Kühlwasserkondensationseinheit 20 wieder zusammengeführt wird. Hierbei können die Verdampfungseinheit 19 und die Kühlwasserkondensationseinheit 20 jeweils als eigener und für die Wärmeübertragung auf das Kältemittel oder Kühlmittel speziell optimierte Wärmetauscher ausgebildet sein, wodurch diese Wärmetauscher bezüglich Werkstoffwahl, Strömungswiderstand und Wärmeübertragung optimiert sein können. Weiters ist dadurch die Absorptionswärmepumpe 8 einfach in bestehende Anlagen integrierbar. Weiters kann bei der parallelen Anordnung und/oder Dampfeinströmung von dem Arbeitsmittelkreislauf 2 in die Verdampfungseinheit 19 und die Kühlwasserkondensationseinheit 20 die Eintrittsenthalpie gleich groß sein, sodass die Effektivität des Kältemittelkreislaufes 7 insgesamt optimiert werden kann.

Weiters kann vorgesehen sein, dass das zweite Wärmetauschersystem 5 ein Ventilsystem 21 zur vorgebbaren Aufteilung eines Arbeitsmittelstroms zwischen der Verdampfungseinheit 19 und der parallel angeordneten Kühlwasserkondensationseinheit 20 aufweist. Dadurch kann die zum Kondensieren des Arbeitsmittels in dem zweiten Wärmetauschersystem 5 abzugebende Wärmemenge gezielt zwischen der Absorptionswärmepumpe 8 und der Kühlwasserkondensationseinheit 20 aufgeteilt werden, wodurch das Dampfkraftwerk 1 ohne Probleme die Leistung ändern kann, und die Absorptionswärmepumpe 8 im optimalen Parameterbereich betrieben werden kann.

In der zweiten bevorzugten Ausführungsform in Fig. 4 bleibt wie zuvor beschrieben im Gegensatz zu Fig. 3 die in Fig.1 vorhandene Kühlwasserkondensationseinheit 20 bestehen und der Abdampf des Dampfturbinensystems 4 wird mit dem Ventilsystem 21 der Gesamtanlagenauslegung entsprechend aufgeteilt, sodass jeweils ein Teil dieser Abwärme der Verdampfungseinheit 19 zur Wärmeabgabe an das Kältemittel zur Verfügung steht und/oder ein Teil der Abwärme der Kühlwasserkondensationseinheit 20 zugeführt wird und mittels Kühlmedium durch die Kühlwasserrücklaufleitung 22 an die Umgebung abgeführt wird. In diesem Fall dient nur jener Anteil der Abwärme aus dem Dampfturbinensystem 4, der in der Verdampfungseinheit 19 an das Kältemittel übergeht, zur Wirkungsgradsteigerung des Gesamtsystems im Vergleich zum Prozess in Fig.1. Beidseitig wird in der Verdampfungseinheit 19 und/oder der Kühlwasserkondensationseinheit 20 das Arbeitsmittel kondensiert und nach Austritt des kondensierten Arbeitsmittels 2 aus der Verdampfungseinheit 19 und der Kühlwasserkondensationseinheit 20 wieder zusammengeführt und gemeinsam im rechtslaufenden Kreisprozessteil des Gesamtsystems vereint weiter transportiert. Alle weiteren Systemfunktionen dieser zweiten bevorzugten Ausführungsform sind gleichartig wie in der ersten bevorzugten Ausführungsform aus Fig. 3 beschrieben. Sollte der Frischdampf über die Bypassleitung 18 in die Verdampfungseinheit 19 geleitet werden so ist die Funktionsweise wie in Fig. 3 beschrieben. Zusätzlich zur Fig. 3 kann nun der Frischdampf auch über die Bypassleitung 18 direkt an die Kühlwasserkondensationseinheit 20 abgegeben werden was die Betriebsflexibilität des Dampfkraftwerkes 1 verbessert und dessen Verfügbarkeit erhöht. Die dargestellte Anordnung dient unter anderem verglichen mit Fig. 3 zur einfacheren Integration in bereits bestehende Systeme und ist als teilweise und/oder partielle Überlagerung von links- und rechtsläufigen Kreisprozessen unter Einsatz eines Absorptionswärmepumpenprozesses zu verstehen. Sie dient ebenfalls dazu, finanzielle oder örtlich vorhandene Aspekte von Bestandsanlagen oder aber auch bei Neuprojekten in die Auslegung des Dampfkraftwerkes 1 stärker miteinzubeziehen.

Alternativ kann vorgesehen sein, dass eine aus Kühlwasserkondensationseinheit 20 führende Kühlwasserrücklaufleitung 22 durch die Verdampfungseinheit 19 des Kältemittelkreislaufes 7 führt. Hierbei erfolgt ein Wärmeaustausch zwischen dem Arbeitsmittelkreislauf 2 und dem Kältemittelkreislauf 7 in dem zweiten Wärmetauschersystem 5 nicht direkt über einen Wärmetauscher, sondern über das Kühlwasser als Trägermedium. Vorteilhaft daran ist, dass bei einem bestehenden Dampfkraftwerk 1 der Arbeitsmittelkreislauf 2 in dem zweiten Wärmetauschersystem 5 unverändert bleiben kann, wodurch eine Nachrüstung besonders einfach möglich ist.

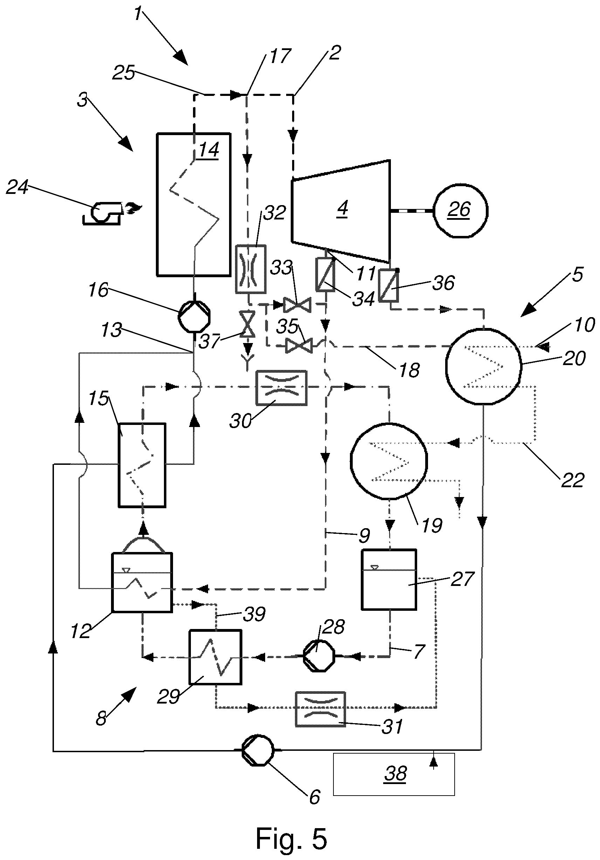

Fig. 5 zeigt, in einer als Prozessschaltbild dargestellten Form, eine dritte bevorzugte Ausführungsform des Dampfkraftwerkes 1. Hierbei bleibt die vorhandene Verdampfungseinheit 19 wie in Fig. 4 bestehen und die Verdampfungswärme des Kältemittels wird aus der Kühlwasserrücklaufleitung 22 der Kühlwasserkondensationseinheit 20 entnommen. Der restliche Prozess gleicht jenem in Fig. 3 wobei keine Aufteilung des Abdampfstromes wie in Fig.4 erforderlich ist. Das Ventilsystem 21 aus Fig.4 entfällt somit. Aufgrund der niedrigen Temperaturen des Kühlwassers ist die thermodynamische Auslegung bezogen auf den Gesamtwirkungsgrad in diesem Fall verglichen mit den anderen bevorzugten Ausführungsbeispielen Fig. 3 und Fig. 4 am wenigsten ergiebig.

Weiters kann vorgesehen sein, dass ein weiterer Kältemittelkreislauf 23 zumindest teilweise das erste Wärmetauschersystem 3 und zumindest teilweise das zweite Wärmetauschersystem 5 umfasst, wobei insbesondere der weitere Kältemittelkreislauf 23 im Aufbau dem Kältemittelkreislauf 7 entspricht. Die Absorptionswärmepumpe 8 kann dann mehrere parallel arbeitende Kältemittelkreisläufe 7, 23 aufweisen, welche je nach Bedarf und Auslastung zugeschaltet werden können. Dadurch kann ein sehr flexibel auf Leistungsänderungen reagierendes Dampfkraftwerk erreicht werden. Aus Auslegungs- Herstellungs- und Kostengründen kann man dann den linkslaufenden Absorptionswärmepumpenkreisprozess auf mehrere parallel zu betreibende Kältemittelkreisläufe 7, 23 aufteilen.

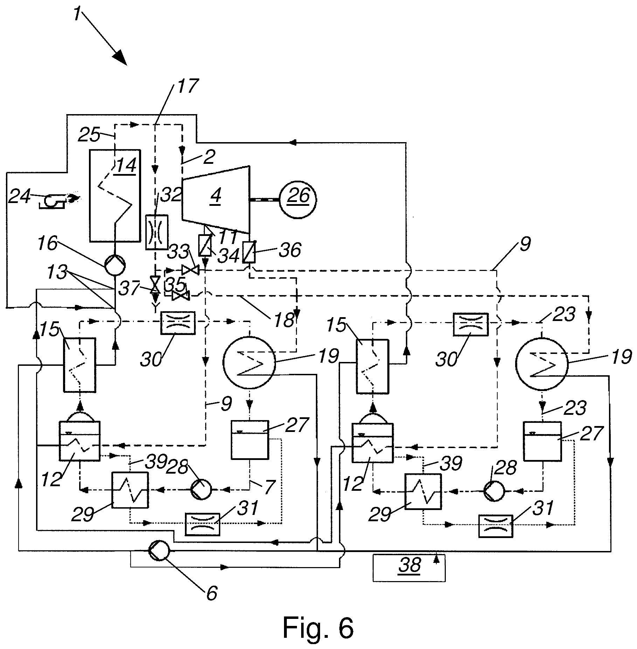

Fig. 6 zeigt exemplarisch, in einer als Prozessschaltbild dargestellten Form, eine vierte bevorzugte Ausführungsform des Dampfkraftwerkes 1. Hierbei ist ein Dampfkraftwerk 1 gemäß Fig. 3 mit zwei parallel betriebenen linkslaufenden Absorptionswärmepumpenprozessen dargestellt, welche jeweils einen eigenen Kältemittelkreisläufe 7, 23 aufweisen. Weiters können auch noch weitere Parallelanordnungen mit drei, vier oder noch mehr Kältemittelkreisläufe 7, 23 vorgesehen sein, die gleichzeitig für den Verlustwärmeverschub sorgen. Dabei wird in jedem dieser Parallelprozesse jener Anteil der Verlustwärme aus dem rechtslaufenden Kreisprozessteil des Arbeitsmittelkreislaufes 2 verschoben, welcher der Auslegung des Kältemittelkreislaufes 7, 23 entspricht. Diese parallel betriebene Mehrfachanordnung ist sinnvoll, um die Gesamtanlage für größere Teillastfähigkeit, bei gleichzeitigem Redundanzgewinn hinsichtlich der Verfügbarkeit für das Gesamtsystem, zu optimieren.

Aus Auslegungs- Herstellungs- und Kostengründen kann man den linkslaufenden Absorptionswärmepumpenkreisprozessteil des Gesamtsystems auch bei den bevorzugten Ausführungsformen gemäß den Fig. 4 und 5 auf mehrere parallel zu betreibende Kältemittelkreisläufe 7,23 aufteilen wie bei Fig. 6 für Fig. 3 dargestellt. Dabei wird in jedem dieser Parallelprozesse jener Anteil der Verlustwärme aus dem rechtslaufenden Kreisprozessteil verschoben, welcher der Auslegung des jeweiligen Kältemittelkreislaufes 7, 23 entspricht.

Hierbei können die einzelnen Ausbildungen des zweiten Wärmetauschersystems 5 der unterschiedlichen bevorzugten Ausführungsformen miteinander kombiniert werden, um die Vorteile der einzelnen bevorzugten Ausführungsbeispiele zu kombinieren. Vorzugsweise kann zum Beispiel vorgesehen sein, dass die bevorzugte Ausführungsform in Fig. 6 zusätzlich mit einer Kühlwasserkondensationseinheit 20 ausgebildet wird, welche gemäß der zweiten oder der dritten bevorzugten Ausführungsform betrieben wird.

## Patentansprüche

1. Dampfkraftwerk (1) mit einem Arbeitsmittelkreislauf (2) für ein Arbeitsmittel, wobei der Arbeitsmittelkreislauf (2) - in Flussrichtung des Arbeitsmittels betrachtet - ein erstes Wärmetauschersystem (3) zum Verdampfen des Arbeitsmittels, ein Dampfturbinensystem (4), ein zweites Wärmetauschersystem (5) zum Kondensieren des Arbeitsmittels und ein Arbeitsmittelpumpsystem (6) umfasst, wobei wenigstens ein Kältemittelkreislauf (7) einer Absorptionswärmepumpe (8) zumindest teilweise das erste Wärmetauschersystem (3) und zumindest teilweise das zweite Wärmetauschersystem (5) umfasst, wobei die Absorptionswärmepumpe (8) zum Verbringen von Wärmeenergie von dem zweiten Wärmetauschersystem (5) zu dem ersten Wärmetauschersystem (3) ausgebildet ist, wobei eine Austreibungsleitung (9) von einer Turbinenanzapfung (11) des Dampfturbinensystems (4) über ein Austreibersystem (12) der Absorptionswärmepumpe (8) zu einer Einspeisung (13) in den Arbeitsmittelkreislauf (2) führt, wobei das Arbeitsmittel in der Austreibungsleitung (9) Wärmeenergie für einen Austreibungsprozess der Absorptionswärmepumpe (8) bereitstellt, **dadurch gekennzeichnet, dass** das Arbeitsmittelpumpsystem (6) das im zweiten Wärmetauschersystem (5) kondensierte Arbeitsmittel dem ersten Wärmetauschersystem (3) zuführt.

2. Dampfkraftwerk (1) nach Anspruch 1, **dadurch gekennzeichnet, dass** das erste Wärmetauschersystem (3) ein Dampferzeugersystem (14) des Arbeitsmittelkreislaufes (2) und eine Verflüssigungseinheit (15) des Kältemittelkreislaufes (7) aufweist, und dass die Verflüssigungseinheit (15) als Wärmetauscher zwischen Arbeitsmittelkreislauf (2) und Kältemittelkreislauf (7) ausgebildet ist.

3. Dampfkraftwerk (1) nach Anspruch 2, **dadurch gekennzeichnet, dass** die Einspeisung (13) der Austreibungsleitung (9) in den Arbeitsmittelkreislauf (2) zwischen dem Dampferzeugersystem (14) und der Verflüssigungseinheit (15) angeordnet ist.

4. Dampfkraftwerk (1) nach Anspruch 2 oder 3, **dadurch gekennzeichnet, dass** ein weiteres Arbeitsmittelpumpsystem (16) zwischen der Einspeisung (13) der Austreibungsleitung (9) in den Arbeitsmittelkreislauf (2) und dem Dampferzeugersystem (14) angeordnet ist.

5. Dampfkraftwerk (1) nach einem der Ansprüche 1 bis 4, **dadurch gekennzeichnet, dass** die Austreibungsleitung (9) eingangseitig zusätzlich zu der Turbinenanzapfung (11) eine vorgebbar verschließbare Frischdampfanzapfung (17) aufweist, welche Frischdampfanzapfung (17) zwischen dem ersten Wärmetauschersystem (3) und dem Dampfturbinensystem (4) angeordnet ist.

6. Dampfkraftwerk (1) nach Anspruch 5, **dadurch gekennzeichnet, dass** von der Frischdampfanzapfung (17) eine vorgebbar verschließbare Bypassleitung (18) des Arbeitsmittelkreislaufes (2) zu dem zweiten Wärmetauschersystem (5) führt.

7. Dampfkraftwerk (1) nach einem der Ansprüche 1 bis 6, **dadurch gekennzeichnet, dass** das zweite Wärmetauschersystem (5) eine Verdampfungseinheit (19) des Kältemittelkreislaufes (7) aufweist.

8. Dampfkraftwerk (1) nach einem der Ansprüche 1 bis 7, **dadurch gekennzeichnet, dass** das zweite Wärmetauschersystem (5) eine Kühlwasserkondensationseinheit (20) des Arbeitsmittelkreislaufes (2) aufweist.

9. Dampfkraftwerk (1) nach Anspruch 7 und 8, **dadurch gekennzeichnet, dass** der Arbeitsmittelkreislauf (2) in dem zweiten Wärmetauschersystem (5) parallel durch die Verdampfungseinheit (19) des Kältemittelkreislaufes (7) und die Kühlwasserkondensationseinheit (20) führt.

10. Dampfkraftwerk (1) nach Anspruch 9, **dadurch gekennzeichnet, dass** das zweite Wärmetauschersystem (5) ein Ventilsystem (21) zur vorgebbaren Aufteilung eines Arbeitsmittelstroms zwischen der Verdampfungseinheit (19) und der parallel angeordneten Kühlwasserkondensationseinheit (20) aufweist.

11. Dampfkraftwerk (1) nach Anspruch 7 und 8, **dadurch gekennzeichnet, dass** eine aus Kühlwasserkondensationseinheit (20) führende Kühlwasserrücklaufleitung (22) durch die Verdampfungseinheit (19) des Kältemittelkreislaufes (7) führt.

12. Dampfkraftwerk (1) nach einem der Ansprüche 1 bis 11, **dadurch gekennzeichnet, dass** ein weiterer Kältemittelkreislauf (23) zumindest teilweise das erste Wärmetauschersystem (3) und zumindest teilweise das zweite Wärmetauschersystem (5) umfasst, wobei insbesondere der weitere Kältemittelkreislauf (23) im Aufbau dem Kältemittelkreislauf (7) entspricht.

13. Verfahren zum Betreiben eines Dampfkraftwerkes (1) im Regelbetrieb, wobei in einem Arbeitsmittelkreislauf (2) ein Arbeitsmittel in einem ersten Wärmetauschersystem (3) verdampft und einem Dampfturbinensystem (4) zugeführt wird, wobei das Arbeitsmittel nach dem Dampfturbinensystem (4) in einem zweiten Wärmetauschersystem (5) kondensiert und über ein Arbeitsmittelpumpsystem (6) wieder dem ersten Wärmetauschersystem (3) zugeführt wird, wobei mittels wenigstens einem Kältemittelkreislauf (7) einer Absorptionswärmepumpe (8) Wärmeenergie von dem zweiten Wärmetauschersystem (5) zu dem ersten Wärmetauschersystem (3) verbracht wird, wobei bei einer Turbinenanzapfung (11) ein Teil des Arbeitsmittels aus dem Dampfturbinensystem (4) in eine Austreibungsleitung (9) abgezweigt, in einem Austreibersystem (12) der Absorptionswärmepumpe (8) verflüssigt und bei einer Einspeisung (13) wieder in den Arbeitsmittelkreislauf (2) rückgeführt wird, wobei durch diesen Teil des Arbeitsmittels Wärmeenergie für einen Austreibungsprozess der Absorptionswärmepumpe (8) bereitgestellt wird.

14. Verfahren nach Anspruch 13, **dadurch gekennzeichnet, dass** in einem Anfahrbetrieb und oder Abfahrbetrieb des Dampfkraftwerkes (1) das Arbeitsmittel an dem Dampfturbinensystem (4) vorbei zu dem zweiten Wärmetauschersystem (5) und/oder dem Austreibersystem (12) der Absorptionswärmepumpe (8) geführt wird.

15. Verfahren nach Anspruch 13 oder 14, **dadurch gekennzeichnet, dass** bis zum Erreichen von vorgesehenen Dampfparameter des verdampften Arbeitsmittels oder im Störfall zumindest Teile des verdampften Arbeitsmittels aus dem Arbeitsmittelkreislauf (2) über ein Auslassventil (37) an die Umgebung abgeführt werden, und dass insbesondere über eine externen Prozesswasserversorgung (38) der über das Auslassventil (37) abgegebene Massestrom an Arbeitsmittel aus dem Arbeitsmittelkreislauf (2) ausgeglichen wird.

## Claims

1. Steam power station (1) having a working medium circuit (2) for a working medium, wherein the working medium circuit (2) - viewed in the flow direction of the working medium - has a first heat exchanger system (3) for evaporating the working medium, a steam turbine system (4), a second heat exchanger system (5) for condensing the working medium and a working medium pump system (6), wherein at least one coolant circuit (7) of an absorption heat pump (8) at least partially encompasses the first heat exchanger system (3) and at least partially the second heat exchanger system (5), wherein the absorption heat pump (8) is designed for transferring heat energy from the second heat exchanger system (5) to the first heat exchanger system (3), wherein an expulsion line (9) leads from a turbine bleed point (11) of the steam turbine system (4) via an expulsion system (12) of the absorption heat pump (8) to a injection point (13) into the working medium circuit (2), wherein the working medium in the expulsion line (9) provides heat energy for an expulsion process of the absorption heat pump (8), **characterized in that** the working medium pump system (6) supplies the working medium condensed in the second heat exchanger system (5) to the first heat exchanger system (3).

2. Steam power station (1) according to claim 1, **characterized in that** the first heat exchanger system (3) has a steam generator system (14) of the working medium circuit (2) and a liquefaction unit (15) of the coolant circuit (7), and **in that** the liquefaction unit (15) is designed as a heat exchanger between the working medium circuit (2) and the coolant circuit (7).

3. Steam power station (1) according to claim 2, **characterized in that** the injection point (13) of the expulsion line (9) into the working medium circuit (2) is arranged between the steam generator system (14) and the liquefaction unit (15).

4. Steam power station (1) according to claim 2 or 3, **characterized in that** a further working medium pump system (16) is arranged between the injection point (13) of the expulsion line (9) into the working medium circuit (2) and the steam generator system (14).

5. Steam power station (1) according to one of claims 1 to 4, **characterized in that** the expulsion line (9) has on the input side, in addition to the turbine bleed point (11), a predeterminably closable live steam bleed point (17), which live steam bleed point (17) is arranged between the first heat exchanger system (3) and the steam turbine system (4).

6. Steam power station (1) according to claim 5, **characterized in that** a predeterminably closable bypass line (18) of the working medium circuit (2) leads from the live steam bleed point (17) to the second heat exchanger system (5).

7. Steam power station (1) according to one of the claims 1 to 6, **characterized in that** the second heat exchanger system (5) has an evaporation unit (19) of the coolant circuit (7).

8. Steam power station (1) according to one of claims 1 to 7, **characterized in that** the second heat exchanger system (5) has a cooling water condensation unit (20) of the working medium circuit (2).

9. Steam power station (1) according to claims 7 and 8, **characterized in that** the working medium circuit (2) in the second heat exchanger system (5) leads in parallel through the evaporation unit (19) of the coolant circuit (7) and the cooling water condensation unit (20).

10. Steam power station (1) according to claim 9, **characterized in that** the second heat exchanger system (5) has a valve system (21) for the predeterminable distribution of a working medium flow between the evaporation unit (19) and the cooling water condensation unit (20) arranged in parallel.

11. Steam power station (1) according to claims 7 and 8, **characterized in that** a cooling water return line (22) leading from a cooling water condensation unit (20) passes through the evaporation unit (19) of the coolant circuit (7).

12. Steam power station (1) according to one of claims 1 to 11, **characterized in that** a further coolant circuit (23) comprises at least partially the first heat exchanger system (3) and at least partially the second heat exchanger system (5), wherein the structure of the further coolant circuit (23) in particular corresponds to that of the coolant circuit (7).

13. Method for operating a steam power station (1) in regular operation, wherein a working medium is evaporated in a first heat exchanger system (3) in a working medium circuit (2) and fed to a steam turbine system (4), wherein the working medium is condensed in a second heat exchanger system (5) after the steam turbine system (4) and is fed back again to the first heat exchanger system (3) via a working medium pump system (6), wherein heat energy is transferred from the second heat exchanger system (5) to the first heat exchanger system (3) by means of at least one coolant circuit (7) of an absorption heat pump (8), wherein a part of the working medium is branched off at a turbine bleed point (11) from the steam turbine system (4) into an expulsion line (9), liquefied in an expulsion system (12) of the absorption heat pump (8) and returned to the working medium circuit (2) again at an injection point (13), wherein heat energy is provided by this part of the working medium for an expulsion process of the absorption heat pump (8).

14. Method according to claim 13, **characterized in that,** in a start-up operation and/or shut-down operation of the steam power station (1), the working medium is guided past the steam turbine system (4) to the second heat exchanger system (5) and/or the expulsion system (12) of the absorption heat pump (8).

15. Method according to claim 13 or 14, **characterized in that** until the intended vapor parameters of the vaporized working medium are reached or in the event of a fault, at least parts of the vaporized working medium are discharged from the working medium circuit (2) to the environment via an outlet valve (37), and in particular the mass flow of working medium from the working medium circuit (2) discharged via the outlet valve (37) is balanced via an external process water supply (38).

## Revendications

1. Centrale électrique à vapeur (1) avec un circuit de fluide de travail (2) pour un fluide de travail, dans laquelle le circuit de fluide de travail (2) comprend, vu dans le sens d'écoulement du fluide de travail, un premier système d'échangeur de chaleur (3) pour faire évaporer le fluide de travail, un système de turbine à vapeur (4), un deuxième système d'échangeur de chaleur (5) pour condenser le fluide de travail et un système de pompe à fluide de travail (6), dans laquelle au moins un circuit de réfrigérant (7) d'une pompe à chaleur à absorption (8) comprend au moins en partie le premier système d'échangeur de chaleur (3) et au moins en partie le deuxième système d'échangeur de chaleur (5), la pompe à chaleur à absorption (8) étant conformée pour transférer de l'énergie thermique du deuxième système d'échangeur de chaleur (5) au premier système d'échangeur de chaleur (3), dans laquelle une conduite d'éjection (9) va d'un soutirage de turbine (11) du système de turbine à vapeur (4) jusqu'à une alimentation (13) dans le circuit de fluide de travail (2) en passant par un système d'éjecteur (12) de la pompe à chaleur à absorption (8), le fluide de travail dans la conduite d'éjection (9) fournissant de l'énergie thermique pour un processus d'éjection de la pompe à chaleur à absorption (8), **caractérisée en ce que** le système de pompe à fluide de travail (6) amène le fluide de travail condensé dans le deuxième système d'échangeur de chaleur (5) au premier système d'échangeur de chaleur (3).

2. Centrale électrique à vapeur (1) selon la revendication 1, **caractérisée en ce que** le premier système d'échangeur de chaleur (3) comporte un système de générateur de vapeur (14) du circuit de fluide de travail (2) et une unité de condensation (15) du circuit de réfrigérant (7) et **en ce que** l'unité de condensation (15) est conçue comme un échangeur de chaleur entre le circuit de fluide de travail (2) et le circuit de réfrigérant (7).

3. Centrale électrique à vapeur (1) selon la revendication 2, **caractérisée en ce que** l'alimentation (13) de la conduite d'éjection (9) est disposée dans le circuit de fluide de travail (2) entre le système de générateur de vapeur (14) et l'unité de condensation (15).

4. Centrale électrique à vapeur (1) selon la revendication 2 ou 3, **caractérisée en ce qu'**un autre système de pompe à fluide de travail (16) est disposé entre l'alimentation (13) de la conduite d'éjection (9) dans le circuit de fluide de travail (2) et le système de générateur de vapeur (14).

5. Centrale électrique à vapeur (1) selon l'une des revendications 1 à 4, **caractérisée en ce que** la conduite d'éjection (9) présente du côté de l'entrée, en plus du soutirage de turbine (11), un soutirage de vapeur vive (17) qui peut être fermé de façon prédéterminée, lequel soutirage de vapeur vive (17) est disposé entre le premier système d'échangeur de chaleur (3) et le système de turbine à vapeur (4).

6. Centrale électrique à vapeur (1) selon la revendication 5, **caractérisée en ce qu'**une conduite de dérivation (18) du circuit de fluide de travail (2) pouvant être fermée de manière prédéterminée va du soutirage de vapeur vive (17) au deuxième système d'échangeur de chaleur (5).

7. Centrale électrique à vapeur (1) selon l'une des revendications 1 à 6, **caractérisée en ce que** le deuxième système d'échangeur de chaleur (5) comprend une unité d'évaporation (19) du circuit de réfrigérant (7).

8. Centrale électrique à vapeur (1) selon l'une des revendications 1 à 7, **caractérisée en ce que** le deuxième système d'échangeur de chaleur (5) comprend une unité de condensation d'eau de refroidissement (20) du circuit de fluide de travail (2).

9. Centrale électrique à vapeur (1) selon les revendications 7 et 8, **caractérisée en ce que** le circuit de fluide de travail (2) va jusqu'au deuxième système d'échangeur de chaleur (5) en passant en parallèle à travers l'unité d'évaporation (19) du circuit de refroidissement de réfrigérant (7) et l'unité de condensation d'eau de refroidissement (20).

10. Centrale électrique à vapeur (1) selon la revendication 9, **caractérisée en ce que** le deuxième système d'échangeur de chaleur (5) présente un système de vannes (21) pour la répartition pouvant être prédéterminée d'un flux de fluide de travail entre l'unité d'évaporation (19) et l'unité de condensation d'eau de refroidissement (20) disposée en parallèle.

11. Centrale électrique à vapeur (1) selon les revendications 7 et 8, **caractérisée en ce qu'**une conduite de retour d'eau de refroidissement (22) provenant de l'unité de condensation d'eau de refroidissement (20) passe à travers l'unité d'évaporation (19) du circuit de réfrigérant (7).

12. Centrale électrique à vapeur (1) selon l'une des revendications 1 à 11, **caractérisée en ce qu'**un autre circuit de réfrigérant (23) inclut au moins en partie le premier système d'échangeur de chaleur (3) et au moins en partie le deuxième système d'échangeur de chaleur (5), l'autre circuit de réfrigérant (23) correspondant en particulier, par sa construction, au circuit de réfrigérant (7).

13. Procédé pour le fonctionnement d'une centrale électrique à vapeur (1) en mode régulé dans lequel, dans un circuit de fluide de travail (2), un fluide de travail est évaporé dans un premier système d'échangeur de chaleur (3) et amené à un système de turbine à vapeur (4), dans lequel le fluide de travail est condensé, après le système de turbine à vapeur (4), dans un deuxième système d'échangeur de chaleur (5) et ramené par un système de pompe à fluide de travail (6) au premier système d'échangeur de chaleur (3), dans lequel au moins un circuit de réfrigérant (7) d'une pompe à chaleur à absorption (8) transfère de l'énergie thermique du deuxième système d'échangeur de chaleur (5) vers le premier système d'échangeur de chaleur (3), dans lequel une partie du fluide de travail est dérivé au niveau d'un soutirage de turbine (11) du système de turbine à vapeur (4) vers une conduite d'éjection (9), condensé dans un système d'éjecteur (12) de la pompe à chaleur à absorption (8) et ramené au niveau d'une alimentation (13) dans le circuit de fluide de travail (2), cette partie du fluide de travail fournissant l'énergie thermique pour un processus d'éjection de la pompe à chaleur à absorption (8).

14. Procédé selon la revendication 13, **caractérisé en ce que** dans un mode de démarrage ou d'arrêt de la centrale électrique à vapeur (1), le fluide de travail contourne le système de turbine à vapeur (4) pour aller vers le deuxième système d'échangeur de chaleur (5) et/ou le système d'éjecteur (12) de la pompe à chaleur à absorption (8).

15. Procédé selon la revendication 13 ou 14, **caractérisé en ce que**, jusqu'à ce que les paramètres de vapeur prévus du fluide de travail évaporé soient atteints ou en cas d'incident, des parties au moins du fluide de travail évaporé sont extraites du circuit de fluide de travail (2) par une vanne de sortie (37) et libérées dans l'environnement et **en ce que** le débit de masse de fluide de travail provenant du circuit de fluide de travail (2) libéré par la vanne de sortie (37) est compensé, en particulier par une alimentation externe en eau de process (38).
